Europäisches Patentamt

European Patent Office

Office européen des brevets

(11) Veröffentlichungsnummer: **0 503 457 A2**

## EUROPÄISCHE PATENTANMELDUNG

(21) Anmeldenummer: **92103674.5**

(51) Int. Cl.5: **B23Q 5/04**

(22) Anmeldetag: **04.03.92**

(30) Priorität: **08.03.91 DE 9102786 U**

(43) Veröffentlichungstag der Anmeldung:
**16.09.92 Patentblatt 92/38**

(84) Benannte Vertragsstaaten:
**DE ES FR GB IT**

(71) Anmelder: **Ortlinghaus-Werke GmbH**
**Kenkhauser Strasse 125**
**W-5632 Wermelskirchen(DE)**

(72) Erfinder: **Mombré, Karl Wilhelm, Dipl.-Ing.**
**Luisenstrasse 30**
**W-5632 Wermelskirchen 1(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

(54) **Antrieb für Werkzeugmaschinen.**

(57) Bei einem Antrieb für Werkzeugmaschinen od. dgl. ist ein Schwungrad 10 vorgesehen, dessen Drehmoment über eine steuerbare Kupplungs-Brems-Kombination 11 auf eine Eingangswelle 12 eines Planetengetriebes 13 übertragen wird. Das Gehäuse des Planetengetriebes ist eingangsseitig mit einem Deckel 14' verschlossen, von dem ein zylindrischer Lagerträger axial abragt und die Eingangswelle 12 radial umschließt. In dem Lagerträger ist eine am Schwungrad 10 befindliche Nabe 19' drehbar gelagert. Um den Antrieb günstiger zu gestalten und eine wirkungsvollere Kühlung zu ermöglichen, wird vorgeschlagen, ein Lagergehäuse 15' am Getriebedeckel 14' zu befestigen, in dessen äußerem Axialabschnitt 17' die am Schwungrad 10 befindliche Nabe 19' hineinragt und dort an der Innenfläche 18' des Lagergehäuses 15 drehbar gelagert 20 ist. Die Drehlager 23 für die Eingangswelle 12 sind erst im Inneren der Nabe 19' angeordnet. Das Lagergehäuse 15' umschließt zugleich die ganze Kupplungs-Brems-Kombination 11, deren Betriebsraum 32 sich somit im Inneren 32 des Lagergehäuses 15' befindet.

FIG. 2

Die Erfindung richtet sich auf einen Antrieb der im Oberbegriff des Anspruches 1 angegebenen Art. Solche Antriebe werden für Pressen, Stanzen, Scheren oder für Maschinen zum Tiefziehen von Blechen genutzt.

Bei dem bekannten Antrieb bestand der Lagerträger aus einem am Deckel des Planetengetriebes angebrachten Lagerflansch, dessen Umfang als Drehlager für die Nabe des Schwungrads diente, (DE-OS 39 11 048). Auf der bezüglich des Deckels gegenüberliegenden Seite der Schwungrad-Nabe war die Kupplungs-Brems-Kombination angeordnet und über ihre Innen- und Außenlamellen mit der Eingangswelle des Planetengetriebes in Wirkverbindung. Die Kupplungs-Brems-Kombination war von einer Abdeckung umkleidet, die lösbar mit der Schwungrad-Nabe verbunden war und in deren Inneren ein Kühlöl für eine Umspülung der Kombination sorgte. Zur Abführung des Kühlöls mußten in der Nabe des Schwungrads achsparallele Kanäle vorgesehen sein, um das Kühlöl auf die andere Nabenseite zu überführen. Dort, im Bereich des Deckels, befand sich ein Ölfangring, in welchen das Öl abgeschleudert wurde. Der bekannte Antrieb war hinsichtlich der Kühlung der Kupplungs-Brems-Kombination störanfällig, ineffizient und platzaufwendig. Die Anordnung der Bauteile im Antrieb erforderte eine aufwendige Konstruktion.

Der Erfindung liegt die Aufgabe zugrunde, einen kompakten Antrieb der im Oberbegriff des Anspruches 1 angegebenen Art zu entwickeln, der günstiger gestaltet ist und eine wirkungsvollere Kühlung der Kupplungs-Brems-Kombination gestattet. Dies wird erfindungsgemäß durch die im Kennzeichen des Anspruches 1 angeführten Maßnahmen erreicht, denen folgende besondere Bedeutung zukommt.

Im Gegensatz zum bekannten Antrieb ist bei der Erfindung das Schwungrad sowohl an einem anderen Ort als auch in anderer Weise gelagert. Das Schwungrad befindet sich am äußeren Ende der zum Planetengetriebe führenden Eingangswelle, wobei die Nabe des Schwungrads auf der einen Seite der Kupplungs-Brems-Kombination angeordnet ist, während auf der anderen Seite dieser Kombination der Gehäusedeckel des Planetengetriebes liegt. Am Getriebedeckel ist ein Lagergehäuse befestigt, in dessen äußeren Axialabschnitt die am Schwungrad befindliche Nabe hineinragt und dort an der Innenfläche des Lagergehäuses drehbar gelagert ist. Das Lagergehäuse umschließt zugleich die ganze Kupplungs-Brems-Kombinatio und erzeugt damit einen Raum zur Aufnahme eines Kühlmittels und/oder eines Lecköls. Ein Rohranschluß zur Zu- und Abführung eines Kühlmittels oder eines Lecköls vom Planetengetriebe kann bequem im Bereich des Lagergehäuses oder des zum Planetengetriebe gehörenden Gehäusedeckels vorgesehen sein. Kanäle und platzaufwendige Führungen für das Öl sind somit entbehrlich. Das Lager im Bereich der Nabe sorgt selbsttätig für eine axiale Abdichtung dieses zu kühlenden Raums.

Eine besonders raumsparende Ausbildung ergibt sich, wenn man die zur Kupplung gehörenden Lamellen bereits in demjenigen axial äußeren Abschnitt des Lagergehäuses anordnet, wo auch die Nabe des Schwungrads drehgelagert ist. Dann brauchen außerhalb der Nabe lediglich die zur Bremse gehörenden Lamellen im Inneren des Lagergehäuses angeordnet sein. Das Schwungrad umschließt die Kupplungslamellen radial. Sehr vorteilhaft ist es dabei, einerseits die Nabe und andererseits die Bremse als Träger für die Außenlamellen der Kupplung bzw. der Bremse zu nutzen.

Weitere Maßnahmen und Vorteile der Erfindung ergeben sich aus den Unteransprüchen, den Zeichnungen und der Beschreibung. Dabei richtet sich die Erfindung auf alle daraus entnehmbaren neuen Merkmale und Merkmalskombinationen, auch wenn diese nicht ausdrücklich in den Ansprüchen angeführt sein sollten. In der Zeichnung ist die Erfindung in zwei Ausführungsbeispielen dargestellt, es zeigen:

Fig. 1   einen Axialschnitt durch eine erste Ausführungsform des Antriebs nach der Erfindung und

Fig. 2   in einer entsprechenden Schnittdarstellung eine alternative Ausbildung des Antriebs zu Fig. 1.

Der Antrieb umfaßt ein Schwungrad 10, das von einem nicht näher gezeigten Motor über Keilriemen od. dgl. angetrieben wird. Sein Drehmoment wird durch eine über Druckmittel steuerbare Kupplungs-Brems-Kombination 11 auf eine Eingangswelle 12 übertragen, die zu einem Planetengetriebe 13 führt. Das Gehäuse dieses Planetengetriebes 13 ist, zur Eingangswelle 12 hin, durch einen Getriebedeckel 14 verschlossen, an welchem ein besonderes Lagergehäuse 15 befestigt ist. Das Lagergehäuse 15 erstreckt sich axial vom Getriebedeckel 14 und umschließt die Eingangswelle 12. Das Lagergehäuse 15 läßt sich in zwei Abschnitte 16, 17 gliedern, die, entsprechend ihrer axialen Lage, als "Innenabschnitt 16" und "Außenabschnitt 17" zu bezeichnen sind.

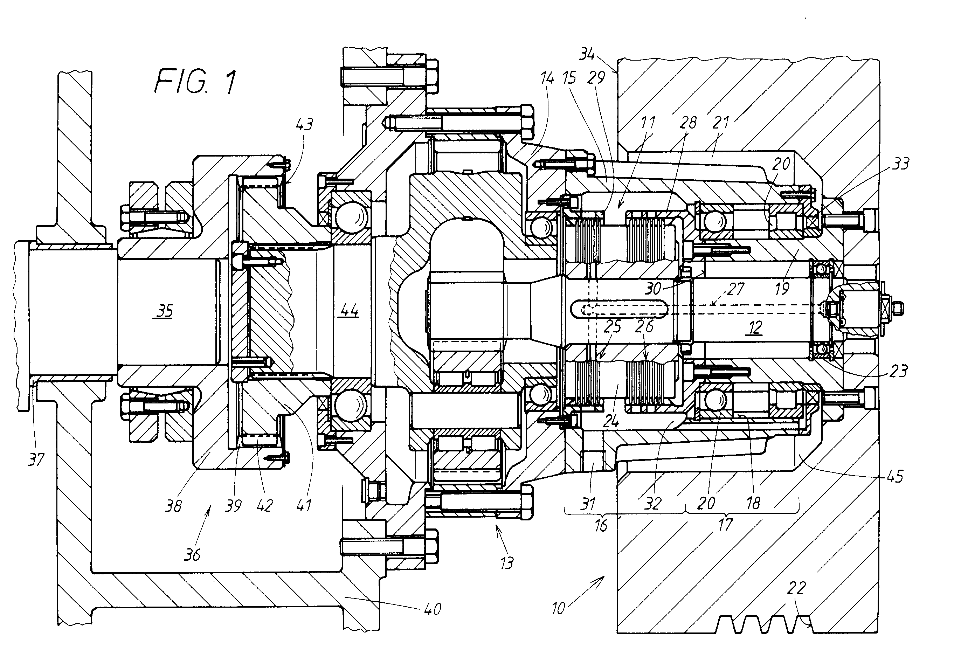

Der Außenabschnitt 17 dient mit seiner Gehäuseinnenfläche 18 zur Aufnahme von Lagern 20 für eine Innenlagerung einer am Schwungrad 10 befindlichen Nabe 19; die Nabe 19 greift axial in das Innere des Lagergehäuses 15 hinein. Das Schwungrad 10 ist an seiner dem Planetengetriebe 13 zugekehrten Stirnfläche 34 mit einer axialen Aussparung 45 versehen, in welche die am Schwungrad 10 befestigte Nabe 19 hineinragt. Dadurch entsteht zwischen der Nabe 19 und der Innenfläche der Axialaussparung 45 eine zum Getriebedeckel 14 hin geöffnete Ringnut 21. In diese Ringnut 21 greift nun das Lagergehäuse 15 im Ausführungsbeispiel der Fig. 1 wenigstens mit seinem axialen Außenabschnitt 17 hinein. Im Inneren der Nabe ist über Lager 23 das eine Ende der Eingangswelle 12 gelagert, die mit ihrem anderen Ende antriebswirksam in das Sonnenrad od. dgl. des Planetengetriebes 13 eingreift.

Der Innenabschnitt 16 des Lagergehäuses 15 umschließt im Ausführungsbeispiel von Fig. 1 die ganze Kupplungs-Brems-Kombination 11, die zwischen der radseitigen Nabe 19 und dem getriebeseitigen Deckel 14 angeordnet ist. Die Kupplung 26 und die Bremse 25 bestehen jeweils aus einer Schar ineinandergreifender Innenlamellen und Außenlamellen 28, 29, die zwei Lamellenpakete bilden, zwischen denen ein von Druckmitteln gesteuerter Kolben 24, z. B. ein Hydraulik-Kolben, angeordnet ist. Gegen seine Druckmittel-Steuerung ist der Kolben 24 durch nicht näher gezeigte Rückstellfedern belastet. Das Druckmittel wird zum Kolben 24 über die angedeuteten Druckmittelkanäle 27 gesteuert, wodurch der Kolben zwischen den Lamellenpaketen der Bremse 25 und der Kupplung 26 hin und herbewegt wird und dadurch, im Wechsel, entweder die Bremse 25 oder die Kupplung 26 wirksam setzt.

Die Außenlamellen werden von Trägern 28, 29 jeweils festgehalten. Der Träger 28 für die Außenlamellen der Kupplung 26 ist in Fig. 1 drehfest mit dem axialen Innenende 30 der Nabe 19 verbunden, während der Träger 29 für die Außenlamellen der Bremse 25 unmittelbar am Deckel 14 des Planetengetriebes 13 befestigt ist. Durch Federkraft ist normalerweise die Bremse 25 wirksam und die Kupplung 26 unwirksam, weshalb dann das Schwungrad 10 sich im Leerlauf befindet. Durch auf den Kolben 24 einwirkende Druckmittel öffnet sich aber die Bremse 25 und setzt die Kupplung 26 wirksam, wodurch das Drehmoment vom Schwungrad 10 auf die Eingangswelle 12 in das Planetengetriebe 13 gelangt, von wo aus es mit einer vom Planetengetriebe bestimmten Untersetzung auf eine Ausgangswelle 44 des Planetengetriebes 13 gelangt. Bei der Steuerung des Kolbens 24 kann das Druckmittel lecken. Ferner kann, was nicht näher gezeigt ist, zusätzlich auch noch ein Kühlmittel die Kupplungs-Brems-Kombination 11 umspülen. Das Kühlmittel kann durch in der Eingangswelle 12 befindliche Kanäle oder durch mit dem Lagergehäuse verbundene Rohranschlüsse zugeführt werden.

Im Bereich der Kupplungs-Brems-Kombination 11 fallen daher laufend Kühlmittel und Leckmengen des Druckmittels an, die es abzuführen gilt. Dies kann, gemäß Fig. 1, in einer besonders einfachen, raumsparenden Weise durch einen Rohranschluß an einer nach unten weisenden Radialbohrung 31 am Innenabschnitt 16 des Lagergehäuses 15 geschehen. Diese Radialbohrung 31 steht in Verbindung mit dem Betriebsraum 32 der Kupplungs-Brems-Kombination 11. Dieser Betriebsraum 32 schließt die Kombination 11 ein, denn an seiner axialen Innenseite befindet sich der beschriebene Getriebedeckel 14 und an seiner Außenseite ist eine Enddichtung 33 vorgesehen, und zwar an dem im Außenabschnitt 17 des Lagergehäuses 15 befindlichen Lager 20 für die Nabe 19. Die abführwirksame Radialbohrung 31 und ggf. eine analoge Ölzuführung sind hier in der Nachbarschaft des Getriebedeckels 14 im Lagergehäuse 15 angeordnet und münden vor der dortigen Schwungrad-Stirnfläche 34 aus. Es liegt eine Ineinanderschachtelung vor; die innere Stirnfläche 34 des Schwungrads 10 liegt in Fig. 1 im Axialbereich zwischen der Bremse 25 und der Kupplung 26.

An die Ausgangswelle 44 ist eine Maschinenwelle 35 in besonderer Weise angeschlossen, nämlich über eine geschmierte Zahnkupplung 36. Durch Belastungen und Verschleiß an im Maschinengestell 40 befindlichen Lagern 37 für die Maschinenwelle 35 kann es zu einem radialen und/oder axialen Versatz der Maschinenwelle 35 kommen. Dies gilt insbesondere dann, wenn die Maschinenwelle 35 besonderen Belastungen ausgesetzt ist, wie sie z. B. bei einer Exzenterwelle in einer Presse auftreten. Deswegen schlägt die Erfindung dort Zahnkupplungen 36 zwischen den beiden Wellen 31, 35 vor, wo in besonders einfacher und zuverlässiger Weise ein entsprechender Ausgleich durch eine radiale und/oder axiale Verschiebung der ineinandergreifenden Zähne möglich ist. Am Maschinengestell 40 sind außer dem Wellenlager 37 auch das Planetengetriebe 13 befestigt.

Die Zahnkupplung 36 umfaßt einen Außenteil 38 mit einer Innenzahnung 39, der am Ende der Maschinenwelle 35 drehfest sitzt, während der zur Zahnkupplung 36 gehörende komplementäre Innenteil 41 mit einer Außenzahnung 42 versehen ist. Der im Außenteil 38 eingeführte Innenteil 41 wird nach außen durch eine Abschlußplatte 43 verschlossen und der so entstehende Innenraum der Zahnkupplung 36 ist mit Fließfett od. dgl. gefüllt.

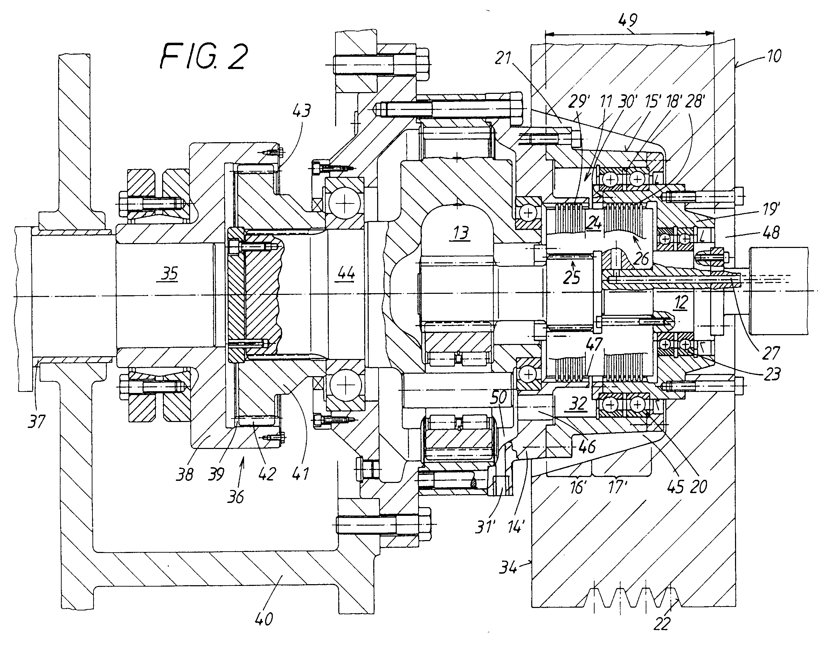

In Fig. 2 ist eine alternative Ausbildung des erfindungsgemäßen Antriebs gezeigt. Dabei sind zur Bezeichnung der entsprechenden Bauteile die gleichen Bezugszeichen wie im ersten Ausführungsbeispiel von Fig. 1 verwendet. Insoweit gilt die bisherige Beschreibung. Es genügt, lediglich auf die baulichen Unterschiede einzugehen.

Der Antrieb von Fig. 2 zeichnet sich durch eine gegenüber Fig. 1 kürzere Bauweise aus. Die zur Kupplung 26 gehörenden Lamellen sind in jenem Außenabschnitt 17' des Lagergehäuses angeordnet. In diesem Fall ist das Lamellenpaket der Kupplung 26 im Inneren der mit dem Schwungrad 10 verbundenen Nabe 19' angeordnet. Die Nabe 19' bildet somit einen Innengehäuseteil, an dessen Umfang die Lager 20 zur drehbaren Lagerung an der Gehäuseinnenfläche 18 des dortigen Lagergehäuses 15' dienen. Im vorliegenden Fall dient somit der erwähnte Außenabschnitt 17' des Lagergehäuses 15' bereits zur Aufnahme der Kupplung 26. Der Kolben 24 greift sogar teilweise noch in den Endbereich der Nabe 19' ein. Lediglich das Lamellenpaket der Bremse 25 ist außerhalb der Nabe 19' in dem erwähnten Innenabschnitt 16' des Lagergehäuses 15' angeordnet. Innenbereiche der Nabe 19' dienen in diesem Fall als Träger 28' für die Außenlamellen der Kupplung 26.

Der Getriebedeckel 14' ist hier in besonderer Weise ausgebildet. Er ist mit einer zylindrischen Anformung 47 versehen, welche das Lamellenpaket der Bremse 25 umschließt. Der Innenbereich dieser zylindrischen Anformung 47 dient als Träger 29' für die Außenlamellen der Bremse 25. Diese Träger 29' sind also einstückig mit dem Getriebedeckel 14' hergestellt.

Im vorliegenden Fall geht die axiale Aussparung 45 des Schwungrads 10 in eine Axialbohrung 48 über, in welche die äußeren Bereiche der Nabe 19' hineinragen. Aufgrund der vorerwähnten Ineinanderschachtelung der Kupplungs-Brems-Kombination 11 mit der Nabe 19' und dem Lagergehäuse 15' ergibt sich eine gegenüber Fig. 1 erheblich kürzere Baulänge 49 außerhalb des Getriebedeckels 14', so daß dieser Bereich des Antriebs von Fig. 2 in ganzer Länge in der axialen Aussparung 45 des Schwungrads 10 verschwindet. Die äußeren Bereiche des Getriebedeckels 14' ragen ebenfalls in das Innere dieser axialen Aussparung 45 hinein. Die ganze Kupplungs-Brems-Kombination 11 ist im Inneren des Schwungrads 10 angeordnet. Die Lamellenpakete der Kupplung 26 und die Lager 20 liegen im mittleren Bereich des Schwungrads 10, also in jenem Umfangsteil 22, wo der Riementrieb am Schwungrad 10 angreift.

Im vorliegenden Fall ist der Getriebedeckel 14' mit einem Durchbruch 46 versehen, der den vorerwähnten Betriebsraum 32 der Kupplungs-Brems-Kombination 11 mit dem Innenraum 50 des Planetengetriebes 13 verbindet. Dieser Getriebe-Innenraum 50 ist mit einem Rohranschluß 31' versehen, durch welchen eine Verbindung mit dem Betriebsraum 32 im Inneren des Lagergehäuses 15' besteht. Eine im Betriebsraum 32 befindliche, nicht näher gezeigte Kühlflüssigkeit kann daher bequem zu- und abgeführt werden und dabei die Wärme abführen, die im Betriebsfall an den Lamellenpaketen der Kupplung 26 und der Bremse 25 anfallen. Im vorliegenden Fall sind die Rohranschlüsse 31', wie aus dem Ausbruch in Fig. 2 zu erkennen ist, in den Getriebedeckel 14' integriert.

Bezugszeichenliste:

| | |
|---|---|
| 10 | Schwungrad |
| 11 | Kupplungs-Brems-Kombination |
| 12 | Eingangswelle |
| 13 | Planetengetriebe |
| 14, 14' | Getriebedeckel vo 1 |
| 15, 15' | Lagergehäuse |
| 16, 16' | Innenabschnitt |
| 17, 17' | Außenabschnitt |
| 18, 18' | Gehäuseinnenfläche von 15 bzw. 15' |
| 19, 19' | Nabe von 10 |
| 20 | Lager für 12 |
| 21 | Ringnut |
| 22 | Umfangteil von 10 |
| 23 | Lager |
| 24 | Kolben bei 11 |
| 25 | Bremse von 11 |
| 26 | Kupplung von 11 |
| 27 | Druckmittelkanal |
| 28, 28' | Außenlamellen-Träger von 26 |
| 29, 29' | Außenlamellen-Träger von 25 |
| 30, 30' | axiales Innenende von 19 bzw. 19' |
| 31, 31' | Radialbohrung in 15 bzw. 14' |
| 32 | Betriebsraum für 11 |
| 33 | Enddichtung |
| 34 | Stirnfläche von 10 |
| 35 | Maschinenwelle |
| 36 | Zahnkupplung |
| 37 | Lager für 35 |
| 38 | Außenteil |
| 39 | Innenzahnung |
| 40 | Gestell |
| 41 | Innenteil von 36 |
| 42 | Außenzahnung von 41 |
| 43 | Abschlußplatte bei 36 |
| 44 | Ausgangswelle |
| 45 | axiale Aussparung in 10 |
| 46 | Durchbruch in 14' |
| 47 | zylinderische Anformung an 14' |
| 48 | Axialbohrung bei 45 |
| 49 | Baulänge von 15', 19' |
| 50 | Getriebe-Innenraum von 13 |

**Patentansprüche**

1.  Antrieb für Werkzeugmaschinen, für Maschinen der Umformtechnik od. dgl.,

    mit einem angetriebenen Schwungrad (10), dessen Drehmoment über eine steuerbare Kupplungs-Brems-Kombination (11) auf eine Eingangswelle (12) eines Planetengetriebes (13) übertragen wird,

    mit einem das Gehäuse des Planetengetriebes (13) eingangsseitig verschließenden Deckel (14), von dem ein zylindrischer Träger abragt, der zur Drehlagerung der Eingangswelle (12) dient,

mit einer Nabe (19) am Schwungrad (10), die am Lagerträger drehbar gelagert ist

und mit einem die Kupplungs-Brems-Kombination (11) umspülenden Kühlmittel,

**dadurch gekennzeichnet**

daß am Getriebedeckel (14; 14') ein Lagergehäuse (15; 15') befestigt ist, in dessen äußeren Axialabschnitt (Außenabschnitt 17, 17') die am Schwungrad (10) befindliche Nabe (19; 19') hineinragt und dort an der Innenfläche (18; 18') des Lagergehäuses (15; 15') drehbar gelagert (20) ist,

die Drehlager (23) für die Eingangswelle (12) im Inneren der Nabe (19; 19') angeordnet sind

und das Lagergehäuse (15; 15') zugleich die ganze Kupplungs-Brems-Kombination (11) umschließt und einen das Kühlmittel aufnehmenden Betriebsraum (32) bildet.

2. Antrieb nach Anspruch 1, dadurch gekennzeichnet, daß Rohranschlüsse (31) zur Zu- und Abführung des Kühlmittels und/oder eines Lecköls am dem Getriebedeckel (14) benachbarten Befestigungsende des Lagergehäuses (15) angeordnet sind, (vergl. Fig. 1).

3. Antrieb nach Anspruch 1, dadurch gekennzeichnet, daß der Getriebedeckel (14') einen Durchbruch (46) aufweist, der den mit Kühlflüssigkeit versehenen Betriebsraum (32) der Kupplungs-Brems-Kombination (11) mit dem Innenraum (50) des Planetengetriebes (13) verbindet, und Rohranschlüsse (31') zum Zu- und Abführen des Kühlmittels und/oder eines Lecköls in der den Getriebe-Innenraum (50) umschließenden Wand (14') angeordnet sind, (vergl. Fig. 2).

4. Antrieb nach Anspruch 2, dadurch gekennzeichnet, daß die Rohranschlüsse (31') in den Getriebedeckel (14') integriert sind, (vergl. Fig. 2).

5. Antrieb nach Anspruch 1 oder 2, dadurch gekennzeichnet, daß die Kupplungs-Brems-Komnbination (11) am axial inneren Abschnitt (Innenabschnitts 16) des Lagergehäuses (15) angeordnet ist, während die Nabe (19) im sich daran anschließenden Außenabschnitt (17) des Lagergehäuses (15) drehgelagert (20) ist, (vergl. Fig. 1).

6. Antrieb nach Anspruch 1, 3 oder 4, dadurch gekennzeichnet, daß das Lamellenpaket der Kupplung (26) der Kombination (11) bereits im Außenabschnitt (17) des Lagergehäuses (15') angeordnet sind, wo sich auch die Nabe (19') des Schwungrads (10) befindet, während im Inneren des Innenabschnitts (17') vom Lagergehäuse (15') nur das Lamellenpaket der Bremse (25) angeordnet ist, (vergl. Fig. 2).

7. Antrieb nach Anspruch 6, dadurch gekennzeichnet, daß die Nabe (19') des Schwungrads (10) die Kupplungslamellen radial umschließt, (vergl. Fig. 2).

8. Antrieb nach einem oder mehreren der Ansprüche 1 bis 7, dadurch gekennzeichnet, daß, bei einer jeweils aus Innenlamellen und Außenlamellen bestehenden Kupplungs-Brems-Kombination (11) die Träger (28) der Außenlamellen bei der Kupplung (26) am axialen Innenende der Nabe (19) und bei der Bremse am Deckel (14) des Planetengetriebes (13) befestigt sind, (vergl. Fig. 1).

9. Antrieb nach Anspruch 6 oder 7, dadurch gekennzeichnet, daß die Nabe (19') des Schwungrads (10) zugleich der Träger (28') für die Außenlamellen der Kupplung (26) ist, (vergl. Fig. 2).

10. Antrieb nach einem oder mehreren der Ansprüche 3 und 4 oder 6, dadurch gekennzeichnet, daß der Getriebedeckel (14') zugleich Träger (29') für die Außenlamellen der Bremse (25) ist, (vergl. Fig. 2).

11. Antrieb nach einem oder mehreren der Ansprüche 1 bis 10, dadurch gekennzeichnet, daß das Schwungrad (10) eine Axialaussparung (45) für seine Nabe (19, 19') aufweist und die Nabe (19, 19') mit der Innenfläche der Axialaussparung (45) eine zum Getriebedeckel (14, 14') hin geöffnete Ringnut (21) bildet, in welche das Lagergehäuse (15, 15') wenigstens mit seinem axialen Außenabschnitt (17, 17') eingreift.

12. Antrieb nach Anspruch 11, dadurch gekennzeichnet, daß das Lagergehäuse (15') in ganzer Länge in die Ringnut (21) eintaucht, (vergl. Fig. 2).

13. Antrieb nach Anspruch 9, dadurch gekennzeichnet, daß der Getriebedeckel (14') bereichsweise in die Ringnut (21) eintaucht, (vergl. Fig. 2).

14. Antrieb nach einem oder mehreren der Ansprüche 1 bis 13, dadurch gekennzeichnet, daß die Ausgangswelle (44) des Planetengetriebes (13) über eine geschmierte Zahnkupplung (36) mit einer Maschinenwelle (35) verbunden ist.

15. Antrieb nach Anspruch 14, dadurch gekennzeichnet, daß die Maschinenwelle (35) die Exzenterwelle einer Presse ist.

FIG. 1

FIG. 2

EP 0 503 457 A2